# EUROPEAN PATENT APPLICATION

(11) **EP 4 289 608 A1**
(43) Date of publication of application: **13.12.2023**
(21) Application number: 23152434.9
(22) Date of filing: 19.01.2023
(51) Int. Cl.: B29C 70/54, B29C 70/48, B29D 99/00, B29C 70/44

(54) **MANUFACTURING DEVICE FOR COMPOSITE MATERIAL STRUCTURE AND MANUFACTURING METHOD FOR COMPOSITE MATERIAL STRUCTURE**

(30) Priority: 10.06.2022 JP 2022094427
(71) Applicant: Mitsubishi Heavy Industries, Ltd., Chiyoda-ku Tokyo 100-8332 (JP)
(72) Inventor: TOKUTOMI, Hiroshi, Chiyoda-ku, Tokyo 100-8332 (JP); SHIMIZU, Masahiko, Chiyoda-ku, Tokyo 100-8332 (JP); MANO, Shoya, Chiyoda-ku, Tokyo 100-8332 (JP); SHINDO, Kentaro, Chiyoda-ku, Tokyo 100-8332 (JP); FUJITA, Takeshi, Chiyoda-ku, Tokyo 100-8332 (JP)
(74) Representative: Hoffmann Eitle

(57) **Abstract**

A manufacturing device manufactures a composite material structure by impregnating resin into a preform (2) formed in a predetermined shape. The manufacturing device includes:

a caul plate (12) defining a space inside and covering the preform in the space;

a supply part (14) that supplies resin to the preform ;

a discharge part (15) that discharges a gas from the space through a discharge hole in the caul plate (12);
and a pressure intensifier (13) that is provided in the space and between the caul plate (12) and the preform (2) and pressurizes the preform (2) by a gas being discharged through the discharge part. The pressure intensifier (13) has a web part facing surface (13A, 13B) facing the preform (2) and a caul plate facing surface (13C) facing the caul plate (12), and through holes (13D, 13E) between the web part facing surface and the caul plate facing surface (13C) are in the pressure intensifier (13).

## Description

### BACKGROUND

### 1. TECHNICAL FIELD

The present disclosure relates to a manufacturing device for a composite material structure and a manufacturing method for a composite material structure.

### 2. DESCRIPTION OF RELATED ART

As a method of manufacturing a component made of a composite material of compounded resin and fibers, there is known a method of impregnating resin into a preform formed in a predetermined shape and curing the resin impregnated into the preform. In such a method, a preform is pressurized to impregnate a resin therein by covering the preform with a bag or a caul plate, supplying a resin to the preform covered with the bag or the caul plate, and evacuating (vacuuming) the gas in a space in which the preform is arranged.

However, when a component having an undercut shape, a component having a curved part, or the like is manufactured, covering a preform with a bag can cause bridging and may not suitably pressurize the preform. Further, when the preform is covered with a caul plate, fitting the caul plate with the preform can cause dragging of fibers. To solve such problems, there is a method of using an indenter whose cross section is substantially triangular to pressurize the preform indirectly via the indenter (for example, as in U. S. Patent No. 10213970).

U.S. Patent No. 10213970 discloses a method of covering a component 32 with a vacuum film 10 and pressurizing the component 32 indirectly via a hollow mandrel 78 whose cross section is substantially triangular.

U.S. Patent No. 10213970 is an example of the related art.

When a pressure intensifier is used, it is not possible to directly vacuum the surface of the preform in contact with the indenter. Thus, a gas contained in a portion of the preform in contact with the indenter (for example, air or a volatile gas) will be guided through inside the preform to a discharge part. In such a case, if a resin is undesirably impregnated into a portion in the middle of a gas flow path, the flow of the gas is blocked by the portion, and a blocked gas may remain in the preform without being discharged from the discharge part. The remaining gas in the preform may deteriorate the quality of a completed component because the portion is not impregnated with the resin.

### BRIEF SUMMARY

The present disclosure has been made in view of such circumstances, and an object is to provide a manufacturing device for a composite material structure and a manufacturing method for a composite material structure that can improve the quality of a manufactured composite material structure.

To achieve the above object, the manufacturing device for a composite material structure and the manufacturing method for a composite material structure of the present disclosure employ the following solutions.

A manufacturing device for a composite material structure according to one aspect of the present disclosure is a manufacturing device for a composite material structure that manufactures a composite material structure by impregnating a resin into a preform formed in a predetermined shape, and the manufacturing device includes: a cover part defining a space inside and covering the preform provided in the space; a supply part configured to supply a resin to the preform; a discharge part configured to discharge a gas from the space through a discharge hole provided in the cover part; and a tool provided in the space and between the cover part and the preform and configured to pressurize the preform by a gas being discharged through the discharge part. The tool includes a preform facing surface that faces the preform and a cover part facing surface that faces the cover part, and the tool is provided with a through hole connecting the preform facing surface and the cover part facing surface to each other.

A manufacturing method for a composite material structure according to one aspect of the present disclosure is a manufacturing method for a composite material structure using a manufacturing device for a composite material structure that manufactures a composite material structure by impregnating a resin into a preform formed in a predetermined shape, and the manufacturing device includes a cover part defining a space inside and covering the preform provided in the space, a supply part configured to supply a resin to the preform, a discharge part configured to discharge a gas from the space through a discharge hole provided in the cover part, and a tool provided in the space and between the cover part and the preform and configured to pressurize the preform by a gas being discharged through the discharge part. The tool includes a preform facing surface that faces the preform and a cover part facing surface that faces the cover part, and the tool is provided with a through hole connecting the preform facing surface and the cover part facing surface to each other. The manufacturing method includes: discharging a gas through the discharge part via the through hole.

According to the present disclosure, the quality of a manufactured composite material structure can be improved.

### BRIEF DESCRIPTION OF THE SEVERAL VIEWS OF THE DRAWINGS

Fig. 1 is a schematic longitudinal sectional view illustrating a manufacturing device for a composite material structure according to a first embodiment of the present disclosure.
Fig. 2 is a schematic longitudinal sectional view illustrating a manufacturing device for a composite material structure according to a modified example of the first embodiment of the present disclosure.
Fig. 3 is a schematic longitudinal sectional view illustrating a manufacturing device for a composite material structure according to a modified example of the first embodiment of the present disclosure.
Fig. 4 is a schematic longitudinal sectional view illustrating a manufacturing device for a composite material structure according to a second embodiment of the present disclosure.
Fig. 5 is a schematic longitudinal sectional view illustrating a manufacturing device for a composite material structure according to a third embodiment of the present disclosure.

### DETAILED DESCRIPTION

Embodiments of a manufacturing device for a composite material structure and a manufacturing device for a composite material structure according to the present disclosure will be described below with reference to the drawings.

### First Embodiment

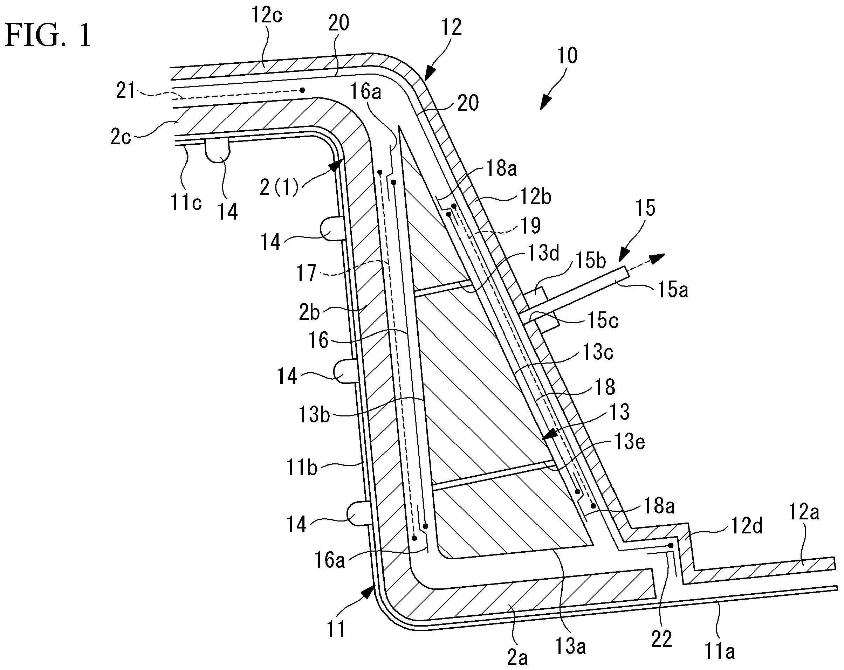

The first embodiment of the present disclosure will be described below with reference to Fig. 1 to Fig. 3.

A manufacturing device 10 according to the present embodiment is used in manufacturing an aircraft component made of a composite material (for example, a stringer, a spar, a frame, a rib, or the like). The composite material may be, for example, carbon fiber reinforced plastic (CFRP) of compounded resin and carbon fibers. Note that a component manufactured by the manufacturing device 10 according to the present embodiment is not limited to an aircraft component and may be, for example, a component used in an aerospace apparatus, an automobile, a wind power generator, or the like. Further, in the following description, a product manufactured by the manufacturing device 10 is referred to as a "composite material structure 1".

The manufacturing device according to the present embodiment is a device that manufactures the composite material structure 1 by impregnating a liquid resin into a carbon preform (hereafter, referred to as a "preform 2") formed in a desired shape and curing the resin that has been impregnated into the preform 2.

The composite material structure 1 according to the present embodiment is a long member extending in a predetermined direction (the sheet depth direction in Fig. 1 etc.). The composite material structure 1 is about 5 m to 10 m in length in the longitudinal direction, for example. As illustrated in Fig. 1, in the composite material structure 1, the cross section taken along a plane orthogonal to the longitudinal direction (the sheet depth direction in Fig. 1 etc.) (hereafter, simply referred to as a "cross section") has a so-called hat shape.

The preform 2 has substantially the same shape as the composite material structure 1. Thus, the sectional shape of the preform 2 is a hat shape. In detail, as illustrated in Fig. 1, the preform 2 has a pair of flange parts 2a each extending in the width direction (the lateral direction in Fig. 1 etc.), a pair of web parts 2b each extending upward from the inner end of each flange part 2a, and a cap part 2c connecting the inner ends of the pair of web parts 2b to each other. The flange part 2a and the web part 2b are connected via a curved part. Further, the web parts 2b and the cap part 2c are connected via a curved part.

The preform 2 has the same sectional shape in the entire extent in the longitudinal direction. Note that only a part of the fiber body is depicted in Fig. 1 etc. for the sake of illustration. Further, each shape of the preform and the composite material structure is an example and is not limited thereto.

The manufacturing device 10 includes a mold 11 on which the preform 2 is placed, a caul plate (a cover part) 12 which covers, from above, the preform 2 and the mold 11 on which the preform 2 is placed, a pressure intensifier (a tool) 13 that is in contact with the preform 2, supply parts 14 that supply a resin to the preform 2, and a discharge part 15 that discharges a gas from a space covered with the caul plate 12.

The preform 2 is placed on the placement surface of the mold 11. The sectional shape of the placement surface corresponds to the shape of the preform 2. The mold 11 has a first portion 11a in contact with the flange part 2a, a second portion 11b in contact with the web part 2b, and a third portion 11c in contact with the cap part 2c in an integral manner. Note that the mold 11 and the preform 2 may be in direct contact with each other or may be in contact via some member therebetween. Note that the material of the mold 11 may be metal, wood, or a resin material.

In the second portion 11b, a plurality of supply parts 14 are provided to supply a resin from the backside (from a surface opposite to a placement surface on which the preform 2 is placed) toward the placement surface. The plurality of supply parts 14 are aligned along the vertical direction at predetermined intervals. Further, the plurality of supply parts 14 are aligned along the longitudinal direction (the sheet depth direction) of the mold 11 at predetermined intervals. Each supply part 14 supplies a liquid resin to the preform 2.

Further, in the third portion 11c, a plurality of supply parts 14 are provided to supply a resin from the underside (from a surface opposite to a placement surface on which the preform 2 is placed) toward the placement surface. The plurality of supply parts 14 are aligned along the lateral direction at predetermined intervals. Further, the plurality of supply parts 14 are aligned along the longitudinal direction (the sheet depth direction) of the mold 11 at predetermined intervals. Each supply part 14 supplies a liquid resin to the preform 2.

The caul plate 12 is a plate-like member. The caul plate 12 covers, from above, the preform 2 placed on the mold 11 and the pressure intensifier 13 that is in contact with the preform 2. The caul plate 12 defines a space therein. The preform 2 and the pressure intensifier 13 are provided in the space defined inside the caul plate 12. The caul plate 12 covers the preform 2 and the pressure intensifier 13 provided in the space.

The caul plate 12 has a first plate part 12a facing the first portion 11a of the mold 11, a second plate part 12b facing a caul plate facing surface 13c of the pressure intensifier 13, a third plate part 12c facing the third portion 11c of the mold 11, and a step part 12d connected between the first plate part 12a and the second plate part 12b in an integral manner. The second plate part 12b and the third plate part 12c are connected via a curved part.

The inner circumferential surface of the caul plate 12 is provided with a caul plate ventilation sheet 20. The caul plate ventilation sheet 20 is in surface contact with the inner circumferential surface. In detail, the caul plate ventilation sheet 20 is in surface contact with the inner circumferential surfaces of the second plate part 12b, the third plate part 12c, and a part of the step part 12d. The caul plate ventilation sheet 20 covers a discharge hole 15c from inside. The caul plate ventilation sheet 20 is a sheet-like member. The caul plate ventilation sheet 20 blocks a resin and passes a gas. The end of the caul plate ventilation sheet 20 is sealed by the seal tape 22.

Further, a caul plate mold-release sheet 21 is provided between the third plate part 12c of the caul plate 12 and the cap part 2c of the preform 2. The caul plate mold-release sheet 21 facilitates mold-releasing between the caul plate 12 and the preform 2.

The caul plate 12 is provided with the discharge part 15. In detail, the second plate part 12b of the caul plate 12 is provided with the discharge part 15. The discharge hole 15c penetrating the caul plate 12 in a plate thickness direction is provided in the second plate part 12b. The discharge part 15 discharges a gas (for example, air or a volatile gas) via the discharge hole 15c. The discharge hole 15c is provided at substantially the center of the second plate part 12b in the vertical direction. Further, the discharge hole 15c is provided between a first through hole 13d and a second through hole 13e provided in the pressure intensifier 13 described later in the vertical direction.

The discharge part 15 discharges a gas from the space defined inside the caul plate 12 via the discharge hole 15c. The discharge part 15 has a discharge pipe 15a inserted in a through hole provided in the second plate part 12b and a seal part 15b that seals a part between the discharge pipe 15a and the caul plate 12. One end of the discharge pipe 15a is opened to the space inside the caul plate 12. The other end of the discharge pipe 15a is opened to the space outside the caul plate 12. The seal part 15b is provided on the outer circumferential surface of the caul plate 12.

The pressure intensifier 13 is a solid member, which is a long member extending in a predetermined direction (the sheet depth direction in Fig. 1 etc.). The pressure intensifier 13 is a member whose cross section in the longitudinal direction (cross section taken along a plane orthogonal to the longitudinal direction) is substantially triangular. The pressure intensifier 13 is provided between the caul plate 12 and the preform 2. The pressure intensifier 13 is provided between the caul plate 12 and the preform 2. The pressure intensifier 13 pressurizes the preform 2 by the gas being discharged through the discharge part 15. In detail, the preform 2 is pressurized so as to be pushed against the mold 11.

The pressure intensifier 13 has a flange part facing surface 13a facing and being in contact with the inner circumferential surface of the flange part 2a, a web part facing surface (a preform facing surface) 13b facing and being in contact with the inner circumferential surface of the web part 2b, and a caul plate facing surface (a cover part facing surface) 13c facing and being in contact with the inner circumferential surface of the caul plate 12. The web part facing surface 13b curves at substantially a right angle and extends from the end of the flange part facing surface 13a.

In the pressure intensifier 13, a first through hole (a through hole) 13d and a second through hole (a through hole) 13e are provided that connect the web part facing surface 13b and the caul plate facing surface 13c to each other. The first through hole 13d and the second through hole 13e are arranged in the vertical direction at a predetermined interval. The first through hole 13d is provided above the discharge hole 15c provided in the caul plate 12. The second through hole 13e is provided below the discharge hole 15c provided in the caul plate 12. The first through hole 13d and the second through hole 13e are each linearly shaped.

Further, first through holes 13d and second through holes 13e are arranged in the longitudinal direction (the sheet depth direction) at predetermined intervals.

An entry-side ventilation sheet (a ventilation part) 16 and an entry-side mold-release sheet 17 are provided between the web part facing surface 13b of the pressure intensifier 13 and the web part 2b of the preform 2. In detail, between the web part facing surface 13b of the pressure intensifier 13 and the web part 2b of the preform 2, the entry-side ventilation sheet 16 and the entry-side mold-release sheet 17 are provided in this order from the pressure intensifier 13 side. The pressure intensifier 13 and the preform 2 are in contact via the entry-side ventilation sheet 16 and the entry-side mold-release sheet 17.

The entry-side ventilation sheet 16 is a sheet-like member. The entry-side ventilation sheet 16 blocks a resin and passes a gas. The entry-side ventilation sheet 16 is in surface contact with the web part facing surface 13b of the pressure intensifier 13. The entry-side ventilation sheet 16 covers entries (openings defined at the ends on the preform 2 side) of the first through hole 13d and the second through hole 13e. Seal tapes 16a are provided at the upper end and the lower end of the entry-side ventilation sheet 16. The seal tapes 16a seal the ends so that the resin does not enter the clearance between each of the upper end and the lower end of the entry-side ventilation sheet 16 and the pressure intensifier 13.

The entry-side mold-release sheet 17 is a perforated mold-release sheet (or a mold-release film) and facilitates mold-releasing of the preform 2 and the pressure intensifier 13 from each other. The entry-side mold-release sheet 17 is larger than the entry-side ventilation sheet 16.

An exit-side ventilation sheet 18 and an exit-side mold-release sheet 19 are provided between the caul plate facing surface 13c of the pressure intensifier 13 and the inner circumferential surface of the second plate part 12b of the caul plate 12 (in detail, the caul plate ventilation sheet 20 provided on the inner circumferential surface of the second plate part 12b). Specifically, the exit-side ventilation sheet 18 and the exit-side mold-release sheet 19 are provided in this order from the pressure intensifier 13 side. The pressure intensifier 13 and the caul plate 12 are in contact via the exit-side ventilation sheet 18 and the exit-side mold-release sheet 19.

The exit-side ventilation sheet 18 is a sheet-like member. The exit-side ventilation sheet 18 blocks a resin and passes a gas. The exit-side ventilation sheet 18 is in surface contact with the caul plate facing surface 13c of the pressure intensifier 13. The exit-side ventilation sheet 18 covers the exits (openings defined at the ends on the caul plate 12 side) of the first through hole 13d and the second through hole 13e. Seal tapes 18a are provided at the upper end and the lower end of the exit-side ventilation sheet 18. The seal tapes 18a seal the ends so that the resin does not enter the clearance between each of the upper end and the lower end of the exit-side ventilation sheet 18 and the pressure intensifier 13.

The exit-side mold-release sheet 19 is a perforated mold-release sheet (or a mold-release film) and facilitates mold-releasing of the pressure intensifier 13 and the caul plate 12 from each other. The exit-side mold-release sheet 19 is larger than the exit-side ventilation sheet 18.

Next, a manufacturing method for a composite material structure using the manufacturing device will be described.

In the present embodiment, a composite material structure is manufactured by performing molding of resin transfer molding (RTM) or vacuum assisted resin transfer molding (VaRTM).

First, a carbon fiber woven fabric is cut into predetermined shapes, and cut carbon fiber woven fabrics are laminated. The laminated carbon fiber woven fabrics are pushed against a mold to manufacture the preform 2 having a desired shape (in the present embodiment, a long member whose cross section is a hat shape).

Next, the preform 2 is placed on the mold 11. Once the preform 2 is placed on the mold 11, the pressure intensifier 13 is then arranged at a predetermined position. Note that, when the preform 2 and the pressure intensifier 13 are arranged, various ventilation sheets, mold-release sheets, and seal tapes are arranged at predetermined positions as needed. Once the pressure intensifier 13 is arranged at the predetermined position, the preform 2 and the pressure intensifier 13 are then covered with the caul plate 12 from above. In such a way, respective components are arranged at the predetermined positions.

Next, a liquid resin is supplied from the supply part 14 to the preform 2, and the gas is discharged through the discharge part 15 from the space defined by the caul plate 12 and the mold 11. Accordingly, the gas contained in the preform 2 is sucked out of the preform 2, and the resin flows into the preform 2. In such a way, the preform 2 is impregnated with the resin. Note that the gas contained in a portion of the preform 2 in contact with the pressure intensifier 13 (in particular, substantially the center region in the vertical direction of the web part 2b) passes through the first through hole 13d and the second through hole 13e, and the gas is discharged through the discharge part 15.

Once the preform 2 is impregnated with the resin, the resin is then cured. When the resin has been cured, the composite material structure 1 is completed. Next, the caul plate 12 is removed, and the pressure intensifier 13 is removed from the composite material structure 1. Finally, the composite material structure 1 is detached from the mold 11.

The present embodiment manufactures the composite material structure 1 as discussed above.

According to the present embodiment, the following effects and advantages are achieved.

In the present embodiment, the first through hole 13d and the second through hole 13e connecting the web part facing surface 13b and the caul plate facing surface 13c to each other are provided in the pressure intensifier 13. Accordingly, when the gas is discharged through the discharge part 15, the gas between the pressure intensifier 13 and the preform 2 or the gas contained in a portion of the preform 2 in contact with the pressure intensifier 13 flows through the first through hole 13d and the second through hole 13e to the discharge part 15 and can be discharged through the discharge part 15. This enables the preform 2 (in particular, the portion facing the pressure intensifier 13) to be suitably impregnated with the resin. Therefore, the quality of the manufactured composite material structure 1 can be improved.

Note that one conceivable method for discharging the gas contained in the portion of the preform in contact with the pressure intensifier may be a method of providing a hollow pressure intensifier, winding a ventilation sheet that passes only a gas and blocks a resin around the hollow pressure intensifier, once causing the gas to flow into the hollow pressure intensifier, and sucking out the gas inside the pressure intensifier, thereby discharging the gas. However, it is difficult in this method to suck the gas inside the hollow pressure intensifier out of the bag film or the caul plate, which may make the structure complex. In particular, when the preform is covered with the caul plate, this may require some complex structure for preventing gas leakage between the inside of the pressure intensifier and a suction device arranged outside the caul plate.

In contrast, in the present embodiment, only the first through hole 13d and the second through hole 13e are provided in the pressure intensifier 13, and therefore the structure can be relatively simplified.

In the present embodiment, the entry-side ventilation sheet 16 that blocks a resin and passes a gas is provided between the preform 2 and the web part facing surface 13b of the pressure intensifier 13. Accordingly, the resin moving from the preform 2 toward the pressure intensifier 13 is blocked by the entry-side ventilation sheet 16. This can make it difficult for the resin to enter the first through hole 13d and the second through hole 13e from the web part facing surface 13b side. Thus, it is less likely to cause a state where the first through hole 13d and the second through hole 13e are clogged by the resin.

Further, the entry-side ventilation sheet 16 passes a gas. Accordingly, the entry-side ventilation sheet 16 does not block discharge of the gas through the first through hole 13d and the second through hole 13e. Therefore, the gas between the pressure intensifier 13 and the preform 2 or the gas contained in the preform 2 of a portion in contact with the pressure intensifier 13 can be suitably discharged through the first through hole 13d and the second through hole 13e.

In the present embodiment, the exit-side ventilation sheet 18 that blocks a resin and passes a gas is provided between the caul plate 12 and the caul plate facing surface 13c of the pressure intensifier 13. Accordingly, the gas that has passed through the first through hole 13d and the second through hole 13e flows between the caul plate 12 and the pressure intensifier 13. The gas that has flown between the caul plate 12 and the pressure intensifier 13 is guided to the discharge part 15. In such a way, the gas that has passed through the first through hole 13d and the second through hole 13e can be guided to the discharge part 15 without connecting each of the first through hole 13d and the second through hole 13e and the discharge part 15 directly. Therefore, the structure can be simplified compared to a structure for directly connecting each of the first through hole 13d and the second through hole 13e and the discharge part 15.

Further, since the resin is blocked by the exit-side ventilation sheet 18, this can make it difficult for the resin to enter the first through hole 13d and the second through hole 13e from the caul plate facing surface 13c side. Thus, it is less likely to cause a state where the first through hole 13d and the second through hole 13e are clogged by the resin.

In the present embodiment, the pressure intensifier 13 is solid. This can improve the strength and the rigidity of the pressure intensifier 13 compared to a case where the pressure intensifier 13 is hollow. Therefore, the pressure intensifier 13 can be increased in size. Thus, a larger composite material structure 1 can be manufactured.

Further, in the present embodiment, since the pressure intensifier 13 is solid, the pressure intensifier 13 can be easily manufactured compared to a case where the pressure intensifier 13 is hollow.

Further, in the present embodiment, two types of through holes (the first through hole 13d and the second through hole 13e) are provided in the pressure intensifier 13. Accordingly, even when either one of the through holes is clogged, the gas can be guided to the discharge part 15 through the other through hole which is not clogged. Therefore, the gas can be suitably discharged.

### Modified Example 1

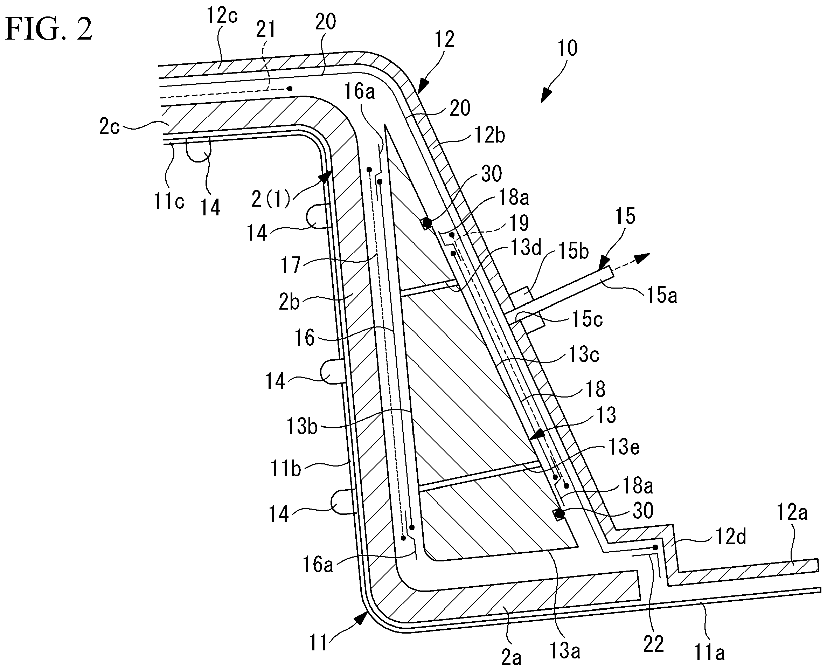

Next, a modified example of the present embodiment will be described with reference to Fig. 2.

The present modified example differs from the above first embodiment in that recesses are provided in the caul plate facing surface 13c of the pressure intensifier 13 and seal members 30 are provided inside the recesses. Since other features are the same as those in the above first embodiment, the same components are labeled with the same references, and detailed description thereof will be omitted.

As illustrated in Fig. 2, recesses recessed from the surface are provided in the caul plate facing surface 13c according to the present modified example. One recess is provided above the first through hole 13d and another recess is provided below the second through hole 13e. In each recess, the seal member 30 that is pressed and elastically deformed due to contact between the caul plate facing surface 13c and the caul plate 12. The exit-side ventilation sheet 18 and the exit-side mold-release sheet 19 are provided between the two recesses.

According to the present modified example, the resin moving toward the space on the exit side of the first through hole 13d and the second through hole 13e is blocked by the seal members 30. This can make it difficult for the resin to enter the first through hole 13d and the second through hole 13e from the caul plate facing surface 13c side. Thus, it is less likely to cause a state where the first through hole 13d and the second through hole 13e are clogged by the resin.

### Modified Example 2

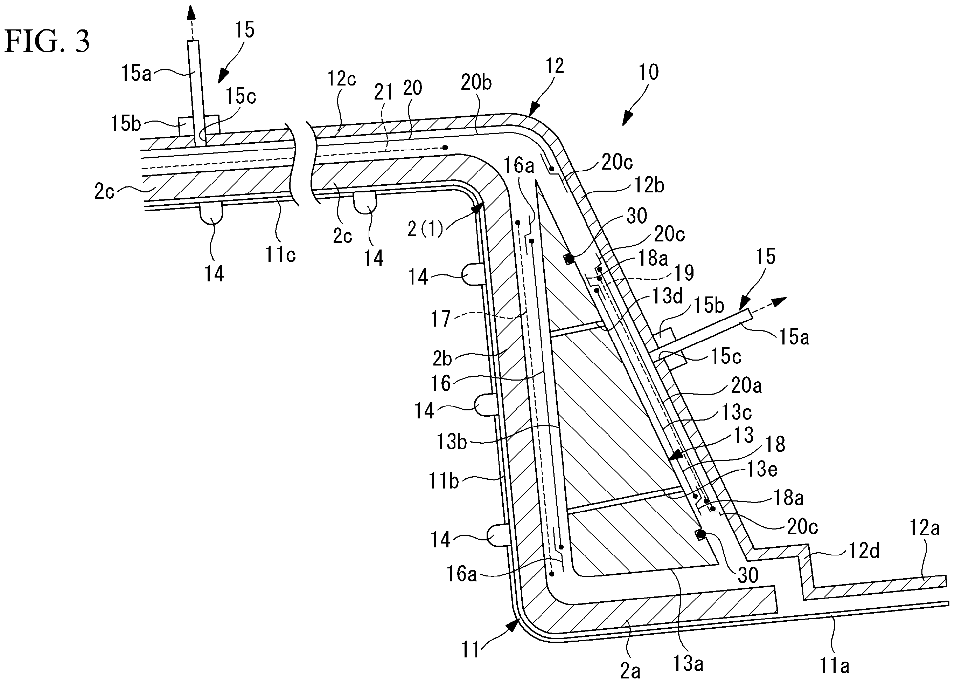

Next, the modified example of the present embodiment will be described with reference to Fig. 3.

The present modified example differs from the above first embodiment in that a plurality of discharge parts 15 are provided. Since other features are the same as those in the above first embodiment, the same components are labeled with the same references, and detailed description thereof will be omitted.

As illustrated in Fig. 3, in the present modified example, the discharge part 15 is also provided on the third plate part 12c of the caul plate 12. Further, the caul plate ventilation sheet 20 is divided into a caul plate ventilation sheet 20a provided on the inner circumferential surface of the second plate part 12b and a caul plate ventilation sheet 20b provided on the inner circumferential surface of the third plate part 12c. Further, seal tapes 20c are provided at the ends of each ventilation sheet.

According to the present modified example, the caul plate ventilation sheet is divided into the caul plate ventilation sheet 20a and the caul plate ventilation sheet 20b, and therefore the length of one caul plate ventilation sheet is shorter. This can cause the caul plate ventilation sheet to be closer contact with the caul plate 12. This can make it difficult for the resin to enter a clearance between the caul plate ventilation sheet and the caul plate 12.

### Second Embodiment

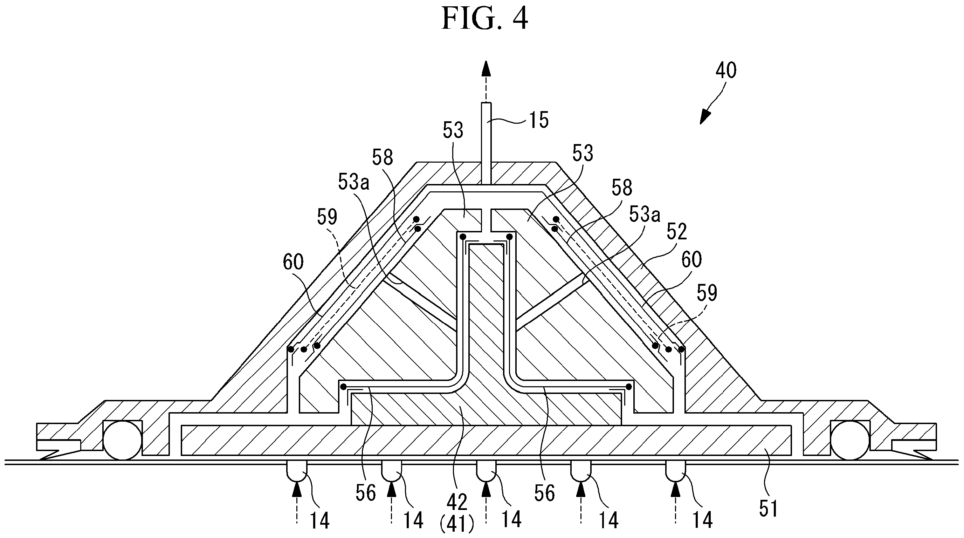

Next, the second embodiment of the present disclosure will be described with reference to Fig. 4.

The present embodiment differs from the above first embodiment in the shape of the composite material structure (preform). Further, the present embodiment differs from the above first embodiment in that the mold, the tool, and the caul plate have different shapes in accordance with a change of the shape of the preform. The same components as those of the above first embodiment are labeled with the same references, and detailed description thereof will be omitted.

As illustrated in Fig. 4, a manufacturing device 40 according to the present embodiment manufactures a composite material structure 41 whose sectional shape is substantially a T-shape. A preform 42 before a resin is impregnated therein also has substantially a T-shape.

A mold 51 is a planar plate-like member. The preform 42 is placed on the upper surface of the mold 51. A plurality of supply parts 14 that supply a resin to the preform 42 are provided on the underside of the mold 51.

Further, indenters (tools) 53 are provided so as to correspond to the preform 42. Each indenter 53 covers, from above, the preform 42 placed on the upper surface of the mold 51. The indenter 53 is provided with a through hole 53a connecting the surface that faces the preform 42 to the surface that faces the caul plate 52. An entry-side ventilation sheet 56 is provided between the preform 42 and the indenter 53.

Further, the caul plate 52 is provided so as to cover the indenter 53 from above. The caul plate 52 has a space defined inside, and the indenter 53 and the preform 42 are provided in this space. Further, caul plate ventilation sheets 60 are provided on the inner circumferential surface of the caul plate 52. Exit-side ventilation sheets 58 covering the opening on the exit side of the through hole 53a are provided between the caul plate 52 and the indenter 53. Further, an exit-side mold-release sheet 59 is provided between each exit-side ventilation sheet 58 and each caul plate ventilation sheet 60. The discharge part 15 is provided at the apex of the caul plate 52.

Also in the present embodiment, the gas contained in the preform 42 passes through the through hole 53a and is discharged through the discharge part 15. Therefore, the same advantageous effects as those in the above first embodiment are achieved.

### Third Embodiment

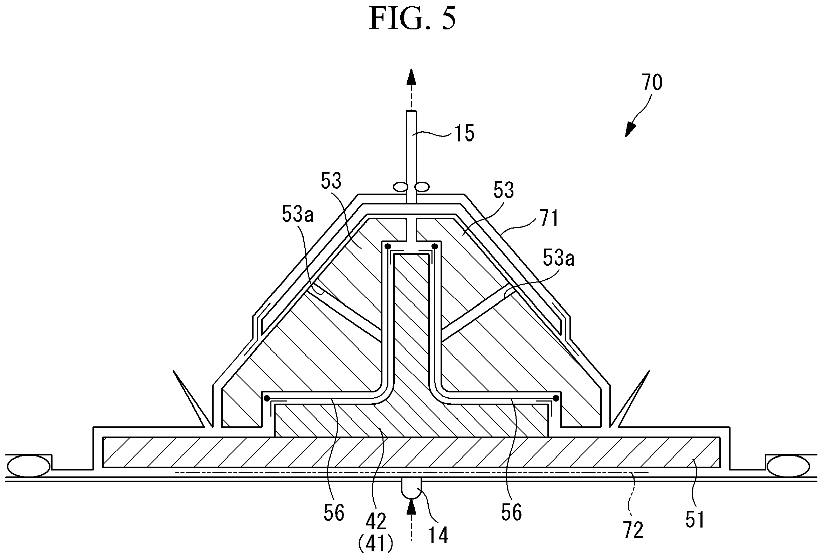

The third embodiment of the present disclosure will be described below with reference to Fig. 5. The present embodiment differs from the above second embodiment in that a bag film 71 is provided instead of the caul plate 52. Since other features are the same as those in the above second embodiment, the same components are labeled with the same references, and detailed description thereof will be omitted.

As illustrated in Fig. 5, a manufacturing device 70 according to the present embodiment is provided with a resin path media 72 between the mold 51 and the supply part 14.

Further, the manufacturing device 70 according to the present embodiment has no exit-side mold-release film.

The bag film 71 covers the preform 42, the indenter 53, and the mold 51 from above.

Also in the present embodiment, the same advantageous effects as those in the first embodiment and the second embodiment described above are achieved.

Note that the present disclosure is not limited to each of the above embodiments, and modification can be made as appropriate within the scope not departing from the spirit of the present disclosure.

For example, in the above embodiments, the cases of manufacturing the composite material structure 1 whose sectional shape taken along a plane orthogonal to the longitudinal direction is a hat shape and manufacturing the T-shaped composite material structure 41 have been described, but the present disclosure is not limited thereto. For example, the manufacturing device and the manufacturing method according to the present disclosure may be used when manufacturing a molded article whose sectional shape taken along a plate orthogonal to the longitudinal direction is a C-shape, an L-shape, or a Z-shape.

Further, in the above first embodiment, the example in which the preform 2 is covered with the caul plate 12 has been described, but the present disclosure is not limited thereto. For example, the preform 2 may be covered with a bag film.

The manufacturing device for a composite material structure and the manufacturing method for a composite material structure described in the embodiments illustrated above are understood as follows, for example.

The manufacturing device for a composite material structure according to the first aspect of the present disclosure is a manufacturing device (10) for a composite material structure that manufactures a composite material structure (1) by impregnating a resin into a preform (2) formed in a predetermined shape, and the manufacturing device includes: a cover part (12) defining a space inside and covering the preform provided in the space; a supply part (14) configured to supply a resin to the preform; a discharge part (15) configured to discharge a gas from the space through a discharge hole (15c) provided in the cover part; and a tool (13) provided in the space and between the cover part and the preform and configured to pressurize the preform by a gas being discharged through the discharge part. The tool includes a preform facing surface (13b) that faces the preform and a cover part facing surface (13c) that faces the cover part, and the tool is provided with a through hole (13d, 13e) connecting the preform facing surface and the cover part facing surface to each other.

In the configuration described above, the tool is provided with the through hole connecting the preform facing surface and the cover part facing surface to each other. Accordingly, when the gas is discharged through the discharge part, the gas between the tool and the preform or the gas contained in a portion of the preform in contact with the tool flows through the through hole to the discharge part, and the gas can be discharged through the discharge part. This enables the preform (in particular, the portion facing the tool) to be suitably impregnated with the resin. Therefore, the quality of the manufactured composite material structure can be improved.

Further, since only the through hole is provided in the tool, the structure can be relatively simplified.

Further, in the manufacturing device for a composite material structure according to the present disclosure, in the first aspect described above, a ventilation part (16) configured to block a resin and pass a gas is provided between the preform and the preform facing surface of the tool.

In the configuration described above, the ventilation part that blocks a resin and passes a gas is provided between the preform and the base material facing surface of the tool. Accordingly, the resin moving from the preform toward the tool is blocked by the ventilation part. Therefore, this can make it difficult for the resin to enter the through hole from the preform facing surface side. Thus, it is less likely to cause a state where the through hole is clogged by the resin.

Further, the ventilation part passes a gas. Accordingly, the ventilation part does not block discharge of the gas through the through hole. Therefore, the gas between the tool and the preform or the gas contained in the preform of a portion in contact with the tool can be suitably discharged through the through hole.

Further, in the manufacturing device for a composite material structure according to the present disclosure, in the first aspect or the second aspect described above, a ventilation part (18) configured to block a resin and pass a gas is provided between the cover part and the cover part facing surface of the tool.

In the configuration described above, the ventilation part that blocks a resin and passes a gas is provided between the cover part and the cover part facing surface of the tool. Accordingly, the gas that has passed through the through hole flows between the cover part and the tool. The gas that has flown between the cover part and the tool is guided to the discharge part. In such a way, the gas that has passed through the through hole can be guided to the discharge part connecting the through hole and the discharge part directly. Therefore, the structure can be simplified compared to a structure for directly connecting the through hole and the discharge part.

Further, since the resin is blocked by the ventilation part, this can make it difficult for the resin to enter the through hole from the cover part facing surface side. Thus, it is less likely to cause a state where the through hole is clogged by the resin.

Further, in the manufacturing device for a composite material structure according to the present disclosure, in any one of the first aspect to the third aspect described above, the tool is solid.

In the configuration described above, the tool is solid. This can improve the strength and the rigidity of the tool compared to a case where the tool is hollow. Therefore, the tool can be increased in size. Thus, a larger composite material structure can be manufactured.

Further, in the configuration described above, since the tool is solid, the tool can be easily manufactured compared to a case where the tool is hollow.

The manufacturing method for a composite material structure according to the present disclosure is a manufacturing method for a composite material structure using a manufacturing device (10) for a composite material structure that manufactures a composite material structure (1) by impregnating a resin into a preform (2) formed in a predetermined shape, and the manufacturing device includes a cover part (12) defining a space inside and covering the preform provided in the space, a supply part (14) configured to supply a resin to the preform, a discharge part (15) configured to discharge a gas from the space through a discharge hole (15c) provided in the cover part, and a tool (13) provided in the space and between the cover part and the preform and configured to pressurize the preform by a gas being discharged through the discharge part. The tool includes a preform facing surface (13b) that faces the preform and a cover part facing surface (13c) that faces the cover part, and the tool is provided with a through hole (13d, 13e) connecting the preform facing surface and the cover part facing surface to each other. The manufacturing method includes: discharging a gas through the discharge part via the through hole.

### [List of References]

- 1:: composite material structure
- 2:: preform
- 2a:: flange part
- 2b:: web part
- 2c:: cap part
- 10:: manufacturing device
- 11:: mold
- 11a:: first portion
- 11b:: second portion
- 11c:: third portion
- 12:: caul plate (cover part)
- 12a:: first plate part
- 12b:: second plate part
- 12c:: third plate part
- 12d:: step part
- 13:: pressure intensifier (tool)
- 13a:: flange part facing surface
- 13b:: web part facing surface (preform facing surface)
- 13c:: caul plate facing surface (cover part facing surface)
- 13d:: first through hole (through hole)
- 13e:: second through hole (through hole)
- 14:: supply part
- 15:: discharge part
- 15a:: discharge pipe
- 15b:: seal part
- 15c:: discharge hole
- 16:: entry-side ventilation sheet (ventilation part)
- 16a:: seal tape
- 17:: entry-side mold-release sheet
- 18:: exit-side ventilation sheet
- 18a:: seal tape
- 19:: exit-side mold-release sheet
- 20:: caul plate ventilation sheet
- 20a:: caul plate ventilation sheet
- 20b:: caul plate ventilation sheet
- 20c:: seal tape
- 21:: caul plate mold-release sheet
- 22:: seal tape
- 30:: seal member
- 40:: manufacturing device
- 41:: composite material structure
- 42:: preform
- 51:: mold
- 52:: caul plate
- 53:: indenter
- 53a:: through hole
- 56:: entry-side ventilation sheet
- 58:: exit-side ventilation sheet
- 59:: exit-side mold-release sheet
- 60:: caul plate ventilation sheet
- 70:: manufacturing device
- 71:: bag film
- 72:: resin path media

## Claims

1. A manufacturing device for a composite material structure, wherein the manufacturing device manufactures a composite material structure by impregnating a resin into a preform formed in a predetermined shape, the manufacturing device comprising:
a cover part defining a space inside and covering the preform provided in the space;
a supply part configured to supply a resin to the preform;
a discharge part configured to discharge a gas from the space through a discharge hole provided in the cover part; and
a tool provided in the space and between the cover part and the preform and configured to pressurize the preform by a gas being discharged through the discharge part,
wherein the tool includes a preform facing surface that faces the preform and a cover part facing surface that faces the cover part, and the tool is provided with a through hole connecting the preform facing surface and the cover part facing surface to each other.

2. The manufacturing device for a composite material structure according to claim 1, wherein a ventilation part configured to block a resin and pass a gas is provided between the preform and the preform facing surface of the tool.

3. The manufacturing device for a composite material structure according to claim 1, wherein a ventilation part configured to block a resin and pass a gas is provided between the cover part and the cover part facing surface of the tool.

4. The manufacturing device for a composite material structure according to claim 1, wherein the tool is solid.

5. A manufacturing method for a composite material structure using a manufacturing device for a composite material structure, wherein the manufacturing device manufactures a composite material structure by impregnating a resin into a preform formed in a predetermined shape,
wherein the manufacturing device comprises
a cover part defining a space inside and covering the preform provided in the space,
a supply part configured to supply a resin to the preform,
a discharge part configured to discharge a gas from the space through a discharge hole provided in the cover part, and
a tool provided in the space and between the cover part and the preform and configured to pressurize the preform by a gas being discharged through the discharge part, and
wherein the tool includes a preform facing surface that faces the preform and a cover part facing surface that faces the cover part, and the tool is provided with a through hole connecting the preform facing surface and the cover part facing surface to each other,
the manufacturing method comprising:
discharging a gas through the discharge part via the through hole.
